# EUROPEAN PATENT APPLICATION

(11) **EP 4 852 131 A1**
(43) Date of publication of application: **09.12.2026**
(21) Application number: 25748672.0
(22) Date of filing: 29.01.2025
(51) Int. Cl.: H01M 10/0587, H01M 4/36, H01M 4/38, H01M 4/62, H01M 4/134, H01M 50/489

(54) **NON-AQUEOUS ELECTROLYTE SECONDARY BATTERY**

(30) Priority: 31.01.2024 JP 2024013276
(71) Applicant: Panasonic Intellectual Property Management Co., Ltd., Kadoma-shi, Osaka 571-0057 (JP)
(72) Inventor: MORISHIMA, Hideki, Kadoma-shi, Osaka 571-0057 (JP); SUGII, Noriko, Kadoma-shi, Osaka 571-0057 (JP); MATSUDA, Hiroshi, Kadoma-shi, Osaka 571-0057 (JP)
(74) Representative: Novagraaf International SA
(86) International application number: PCT/JP2025/002802
(87) International publication number: WO 2025/164669

(57) **Abstract**

A non-aqueous electrolyte secondary battery (10) disclosed herein includes: an electrode group (14) including a positive electrode (11), a negative electrode (12), and a separator (13); and a non-aqueous electrolyte. The negative electrode (12) includes a negative electrode current collector and a negative electrode mixture layer disposed on the negative electrode current collector. An activation energy of the separator 13 at 100°C to 135°C as measured by dynamic viscoelasticity measurement is 400 kJ/mol or more and 700 kJ/mol or less.

## Description

### [Technical Field]

The present disclosure relates to a non-aqueous electrolyte secondary battery.

### [Background Art]

Silicon-containing materials can absorb more lithium ions compared to carbon materials (such as graphite). Therefore, use of the silicon-containing materials as a negative electrode active material of non-aqueous electrolyte secondary batteries has been proposed.

Claim 1 of PTL 1 (WO 2016/035290 A) describes "a negative electrode active material for a non-aqueous electrolyte secondary battery, comprising a lithium silicate phase represented by Li_{2z}SiO_{(2+z)} (0 < z < 2) and silicon particles dispersed in the lithium silicate phase".

### [Citation List]

### [Patent Literature]

PTL 1: WO 2016/035290 A

### [Summary of Invention]

### [Technical Problem]

However, the silicon-containing materials undergo significant expansion and contraction during charging and discharging. Therefore, when the silicon-containing materials are used as the negative electrode active material, pressure fluctuations inside electrode plates during charging and discharging are large. Therefore, a portion of a separator is compressed as a charge-discharge cycle progresses, and variation in state of charge within an electrode group becomes large. Consequently, a cycle capacity retention rate tends to decrease. Therefore, there is a need for a battery that uses a negative electrode active material capable of increasing capacity, and has a high cycle capacity retention rate. Furthermore, there is demand for suppression of temperature rise of the non-aqueous electrolyte secondary batteries during abnormal conditions. In this context, an object of the present disclosure is to provide a non-aqueous electrolyte secondary battery with high capacity and/or cycle capacity retention rate, and small temperature rise during predetermined abnormal conditions.

### [Solution to Problem]

One aspect of the present disclosure relates to a non-aqueous electrolyte secondary battery including: an electrode group including a positive electrode, a negative electrode, and a separator; and a non-aqueous electrolyte, in which the negative electrode includes a negative electrode current collector and a negative electrode mixture layer disposed on the negative electrode current collector, and an activation energy of the separator at 100°C to 135°C as measured by dynamic viscoelasticity measurement is 400 kJ/mol or more and 700 kJ/mol or less.

### [Advantageous Effects of Invention]

According to the present disclosure, it is possible to obtain the non-aqueous electrolyte secondary battery that has high capacity and/or cycle capacity retention rate, and small temperature rise during predetermined abnormal conditions.

The novel features of the present invention are described in the appended claims, but the present invention, both as to configuration and content, and in conjunction with other objects and features of the present invention, will be better understood from the following detailed description with reference to the drawings.

### [Brief Description of Drawings]

FIG. 1 is a diagram schematically illustrating an example of a manufacturing apparatus for a separator used in a non-aqueous electrolyte secondary battery according to the present disclosure.
FIG. 2 is a diagram schematically illustrating an example of a part of the manufacturing apparatus illustrated in FIG. 1.

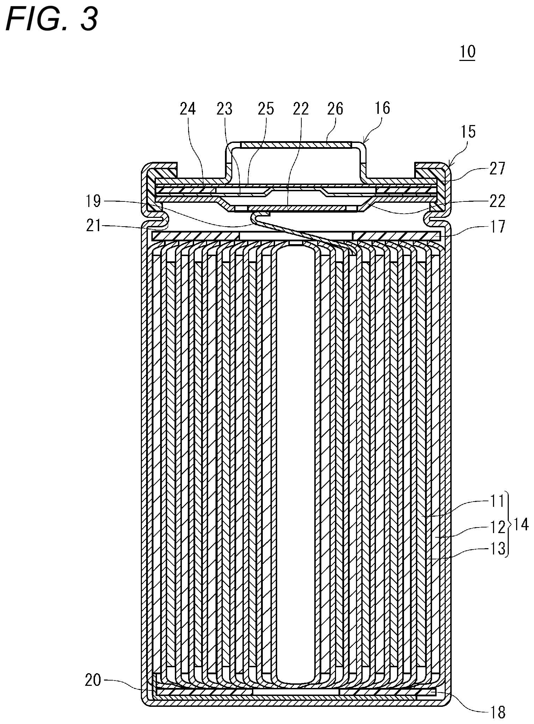

FIG. 3 is a cross-sectional view schematically illustrating an example of the non-aqueous electrolyte secondary battery according to the present disclosure.

### [Description of Embodiments]

Embodiments of the present disclosure will be described below with examples, but the embodiments of the present disclosure are not limited to the examples described below. In the following description, specific numerical values and materials may be given as examples, but other numerical values and other materials may be applied as long as the invention according to the present disclosure is implementable. In this specification, the description "a numerical value A to a numerical value B" includes the numerical value A and the numerical value B, and can be read as "the numerical value A or more and the numerical value B or less". In the following description, when lower limits and upper limits are given as examples for numerical values of specific physical properties, conditions, or the like, any of the given lower limits and any of the given upper limits may be arbitrarily combined as long as the lower limit is not equal to or more than the upper limit.

### (Non-Aqueous Electrolyte Secondary Battery)

The non-aqueous electrolyte secondary battery according to the present embodiment may be referred to as "non-aqueous electrolyte secondary battery (B)" or "secondary battery (B)" below. The secondary battery (B) includes an electrode group including a positive electrode, a negative electrode, and a separator, and a non-aqueous electrolyte. The negative electrode includes a negative electrode current collector and a negative electrode mixture layer disposed on the negative electrode current collector. An activation energy of the separator at 100°C to 135°C as measured by dynamic viscoelasticity measurement is 400 kJ/mol or more and 700 kJ/mol or less. The activation energy of the separator at 100°C to 135°C as measured by dynamic viscoelasticity measurement may be referred to as "activation energy (E)" below.

Through investigation, the inventors of the present application have newly found that by using the above-mentioned separator, it is possible to obtain a non-aqueous electrolyte secondary battery with high capacity and/or cycle capacity retention rate, and small temperature rise during predetermined abnormal conditions. The present disclosure is based on this new finding. Examples of the predetermined abnormal conditions include an abnormality that is a state equivalent to a forced short-circuit test using an external resistor.

Dynamic viscoelasticity can be measured using a viscoelasticity measuring device. Specifically, it can be measured using a viscoelasticity measuring device (DMS6100) manufactured by Seiko Instruments Inc. The measurement is performed by clamping a separator with a width of 10 mm between two chucks. At this time, the separator is clamped between the two chucks so that an MD direction of the separator is parallel to a direction connecting the two chucks. Strain amplitude is set to 10 µm (0.04%). Temperature is raised from 25°C to 160°C at a heating rate of 1°C/min. During the heating process, strain is applied so that a strain frequency repeats in cycles of 10 Hz, 5 Hz, 1 Hz, and 0.5 Hz. The dynamic viscoelasticity is measured under the above conditions.

### (Method for Calculating Activation Energy (E))

The activation energy (E) can be determined by the following procedure.
(1) Measure frequency dependence of the dynamic viscoelasticity of the separator at different temperatures. Specifically, measure the frequency dependence of the dynamic viscoelasticity at 10°C intervals from 30°C to 130°C, and at 135°C. Storage modulus of the separator is determined by this measurement.
(2) Next, plot measurement results at the temperatures as curves on a graph where the X-axis is the logarithm of frequency and the Y-axis is the logarithm of the storage modulus. Next, shift the curves in a frequency direction so that they overlap each other, to create a single master curve. At this time, record an amount of frequency shift for each curve at each temperature.
(3) Next, plot a relationship between the temperature and the amount of frequency shift recorded in the above (2) on a graph where the X-axis is the reciprocal of the temperature and the Y-axis is the logarithm of the amount of frequency shift, to create an Arrhenius plot. At this time, with a temperature T of approximately 100°C as a boundary, one straight line in a region lower than the temperature T and another straight line in a region equal to or higher than the temperature T are drawn. A slope of a straight line in a region of 100°C or higher and 135°C or lower is calculated. From the slope of this straight line, the activation energy (E) of the separator from 100°C to 135°C is calculated based on the Arrhenius equation.

Note that the region of 100°C or higher and 135°C or lower is a temperature region near and below a melting point of a material (for example, polyethylene) of the separator, and the activation energy in this region is considered to be related to thermal motion of molecular chains in a crystalline phase. Crystallinity correlates with strength of a polymer. Therefore, the activation energy (E) determined by the above procedure is considered to indicate the degree of dynamic viscoelasticity (that is, the degree of creep resistance). For the separator of the secondary battery (B), it is important that the activation energy (E) is 400 kJ/mol or more and 700 kJ/mol or less.

### (Separator)

A porous film can be used as the separator. The porous film is not a film formed of fibers, but a film having numerous pores. A polymer can be used as the material of the separator. The separator may be a separator containing a polyolefin as a main component. Note that in this specification, unless otherwise specified, "main component" means a component whose content is 50 mass% or more. The separator may be a separator containing polyethylene as the main component. The polyethylene content in the separator may be 50 mass% or more, 90 mass% or more, or 95 mass% or more. The separator may be made of polyethylene. The porous film made of polyethylene may be used as the separator. The following mainly describes an example in which the separator is made of polyethylene.

High-density polyethylene with high crystallinity is preferably used as the polyethylene. The density of the polyethylene (high-density polyethylene) may be in a range of 0.93 to 0.97 (for example, in the range of 0.95 to 0.97). By using the polyethylene with high crystallinity, it is possible to increase the activation energy (E) of the separator. The crystallinity of polyethylene can be changed by a film formation method and film formation conditions. Note that the same applies to polyolefins other than polyethylene.

The thickness of the separator may be 3 µm or more or 5 µm or more, and may be 15 µm or less or 13 µm or less. Reliability can be improved by making the thickness of the separator 3 µm or more. By making the thickness of the separator 15 µm or less, the capacity can be increased. The thickness of the separator may be 3 µm or more and 15 µm or less.

The activation energy (E) is 400 kJ/mol or more, and may be 500 kJ/mol or more. The activation energy (E) is 700 mol kJ/mol or less, and may be 600 kJ/mol or less or 500 kJ/mol or less. By setting the activation energy (E) to 400 kJ/mol or more, which is higher than that of conventional separators, the cycle capacity retention rate can be significantly increased. This is considered to be because setting the activation energy (E) to 400 kJ/mol or more increases the creep resistance of the separator. High creep resistance of the separator reduces deformation of the separator when charging and discharging is repeated, and reduces variation in state of charge.

By setting the activation energy (E) to 700 kJ/mol or less, temperature rise during abnormal conditions such as short circuits can be suppressed. This is considered to be because fluidity of the separator at high temperatures can be increased, thereby improving a shutdown function of the separator.

The negative electrode includes the negative electrode mixture layer. The negative electrode mixture layer contains a negative electrode active material. The negative electrode active material preferably contains a silicon-containing material. The silicon-containing material contains elemental silicon or a silicon compound. Examples of the silicon compound include silicates, silicon oxides, silicon carbides, silicon nitrides, and silicides. The silicon-containing material may be composite particles constituted of at least one of elemental silicon and silicon compounds, and a silicon-free substance.

The content C(Si) of the silicon-containing material in the negative electrode mixture layer may be 3 mass% or more, 6 mass% or more, or 15 mass% or more. The content C(Si) may be 25 mass% or less, 20 mass% or less, or 15 mass% or less. By setting the content C(Si) to 6 mass% or more, the capacity can be increased. By setting the content C(Si) to 20 mass% or less, a high cycle capacity retention rate can be achieved. The content C(Si) may be 6 mass% or more and 20 mass% or less.

The content C(Si) can be determined from a proportion of the silicon-containing material when preparing the negative electrode mixture (or negative electrode mixture slurry). The content C(Si) in the negative electrode mixture layer of the prepared battery can be determined by disassembling the battery, removing the negative electrode mixture layer, and analyzing the negative electrode mixture layer using a method described later. When the silicon-containing material is composite particles including a silicon-containing phase (silicate phase, silicon phase, silicide phase, or the like) and a silicon-free phase (carbon phase or the like), the content C(Si) is calculated using a total mass of the composite particles as the mass of the silicon-containing material.

The silicon-containing material may include an ion-conducting phase and a silicon phase dispersed in the ion-conducting phase. Specifically, the silicon-containing material may be composite particles including the ion-conducting phase and the silicon phase dispersed in the ion-conducting phase. The ion-conducting phase may be at least one selected from the group consisting of a silicate phase, a carbon phase, a silicide phase, and a silicon oxide phase. By using such a silicon-containing material, the capacity can be increased.

An expansion rate of the negative electrode during charging may be 15% or more, 20% or more, or 30% or more, and may also be 45% or less, 40% or less, or 30% or less. The expansion rate tends to increase as the content of the silicon-containing material in the negative electrode mixture layer increases. The expansion rate may be 20% or more and 40% or less.

The negative electrode mixture layer may contain carbon nanotubes. If the negative electrode mixture layer contains the carbon nanotubes , a good conductive path can be formed even when the negative electrode active material (for example, silicon-containing material) expands and contracts during charging and discharging. As a result, the cycle capacity retention rate can be increased. The content of the carbon nanotubes in the negative electrode mixture layer may be 0.01 mass% or more and 0.05 mass% or less. Within this range, the effect of the carbon nanotubes is particularly high.

In the electrode group, the positive electrode and the negative electrode are stacked with the separator therebetween. The electrode group may be a wound type. That is, in the electrode group, the positive electrode, the negative electrode, and the separator may be wound together. Alternatively, the electrode group may be an electrode group in which a plurality of flat positive electrodes and a plurality of flat negative electrodes are stacked alternately in one direction. In this case as well, the separator is disposed between each positive electrode and each negative electrode.

The shape of the non-aqueous electrolyte secondary battery (B) may be cylindrical or rectangular. The present disclosure is preferably used for a cylindrical secondary battery (B) in which the electrode group is the wound type. The following describes a case where the electrode group is the wound type.

The negative electrode may have a non-facing portion that does not face the positive electrode across the separator on an inner peripheral end side of the negative electrode. The number of turns of the non-facing portion may be 0.4 turns or more and 1.2 turns or less (for example, 0.5 turns or more and 0.8 turns or less). This configuration can suppress pressure fluctuations inside electrode plates during charging and discharging, and suppress crushing of the separator. As a result, smooth charging and discharging behavior can be performed even in later stages of the cycle, and a high cycle capacity retention rate can be achieved.

The number of turns of a portion where the positive electrode and the negative electrode face each other may be 15 turns or more and 60 turns or less (for example, 18 turns or more and 55 turns or less). This configuration makes it possible to achieve both good load characteristics and high capacity of the battery.

### (Method for Manufacturing Separator)

The separator can be formed by melting the material of the separator and forming a film. Pores are formed by removing a component after forming the film. The method for forming the film is not limited and the film may be formed using methods such as casting and biaxial stretching. The component for forming the pores (for example, liquid paraffin) is mixed into the material of the separator. In this manner, the separator that is a porous film is obtained. Removal of this component can be performed by a known method. For example, the liquid paraffin may be removed using a solvent such as methylene chloride.

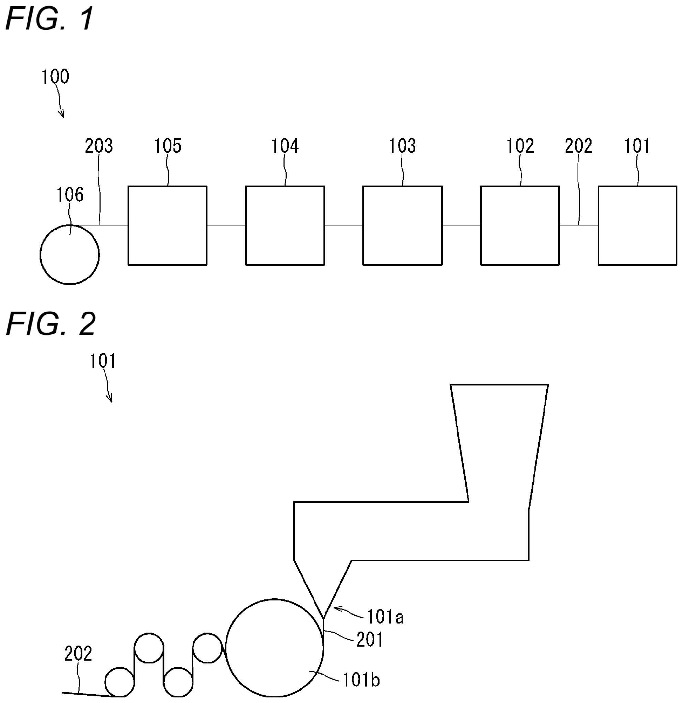

FIG. 1 schematically illustrates an example of a manufacturing apparatus for the separator. The manufacturing apparatus 100 in FIG. 1 includes a kneading and extruding unit 101, a longitudinal stretching unit 102, a transverse stretching unit 103, a solvent extraction unit 104, a transverse stretching and heat setting unit 105, and a winding unit 106.

FIG. 2 schematically illustrates an example of a configuration of the kneading and extruding unit 101. The kneading and extruding unit 101 includes a T-die 101a and a cast roll 101b. A molten material 201 is extruded from the T-die 101a and cooled on the cast roll 101b to form a film 202. The crystallinity of the separator can be controlled by a temperature difference between the extruded material and the cast roll 101b. A large temperature difference results in low crystallinity. By increasing the temperature difference, it is possible to increase crystallinity. By increasing the crystallinity, it is possible to increase the activation energy (E).

The formed film 202 is stretched both in the longitudinal stretching unit 102 and the transverse stretching unit 103. By changing stretching ratios in these units, the crystallinity and activation energy (E) of the separator can be controlled. Specifically, increasing the stretching ratio makes it possible to increase the crystallinity and the activation energy (E).

In the solvent extraction unit 104, the component for forming the pores is removed using the solvent. The film passes the transverse stretching and heat setting unit 105 after the solvent extraction unit 104, and thus a separator 203 is manufactured. The manufactured separator 203 is wound onto a roll by the winding unit 106. By cutting the separator 203 into a predetermined size, a separator 13 is obtained.

### (Method for Manufacturing Non-Aqueous Electrolyte Secondary Battery (B))

There is no particular limitation on the method for manufacturing the secondary battery (B), except for using the separator described above. In one example of the manufacturing method, the positive electrode and the negative electrode are formed, and the non-aqueous electrolyte is prepared. Next, the electrode group is formed using the positive electrode, the negative electrode, and the separator. Next, the electrode group and the non-aqueous electrolyte are housed in a battery case. In this manner, the secondary battery (B) can be manufactured.

### (Examples of Constituent Elements)

Examples of other constituent elements of the secondary battery (B) will be described in detail below. Note that constituent elements described below are illustrative, and the constituent elements of the secondary battery (B) are not limited to the following examples. As constituent elements other than those characteristic of the present embodiment, known constituent elements may be used. The secondary battery (B) usually includes the positive electrode, the negative electrode, the separator, the non-aqueous electrolyte, and the battery case.

### (Positive Electrode (Positive Electrode Plate))

The positive electrode may include a positive electrode current collector and a positive electrode mixture layer disposed on both surfaces of the positive electrode current collector. The positive electrode mixture layer contains a positive electrode active material and may contain other components (conductive material, binding agent, thickener, and the like). These components are not particularly limited, and known components used in the positive electrode of non-aqueous electrolyte secondary batteries may be used.

The positive electrode may be formed by a known method. In one example of a formation method, first, a positive electrode slurry is prepared by mixing the components of the positive electrode with a dispersion medium. As the dispersion medium, water, alcohol, ether, N-methyl-2-pyrrolidone (NMP), a mixture thereof, or the like may be used. Next, the positive electrode slurry is applied to the positive electrode current collector and then dried to form a laminate including the positive electrode current collector and the positive electrode mixture layer formed on the positive electrode current collector. Next, the laminate is rolled as needed. In this manner, the positive electrode is formed.

A conductive sheet can be used as the positive electrode current collector. The positive electrode current collector may be a non-porous conductive sheet (for example, non-porous metal foil). Alternatively, the positive electrode current collector may be a porous conductive sheet, and may be, for example, a metal mesh sheet or punching metal. Examples of materials of the positive electrode current collector include metallic materials containing Al, Ti, Fe, and the like. The metallic materials may be Al, an Al alloy, Ti, a Ti alloy, an Fe alloy (for example, stainless steel), and the like. The thickness of the positive electrode current collector may be in a range of 5 to 50 µm (for example, in a range of 10 to 30 µm).

Examples of the positive electrode active material include olivine-type lithium salts (such as LiFePO₄), chalcogen compounds (titanium disulfide, molybdenum disulfide), manganese dioxide, and lithium-containing composite metal oxides. Examples of the lithium-containing composite metal oxides include metal oxides containing lithium and transition metals. Part of the transition metals in the metal oxides may be substituted with a different element. Examples of the different element include Na, Mg, Sc, Y, Mn, Fe, Co, Ni, Cu, Zn, Al, Cr, Pb, Sb, and B. The different element is preferably Mn, Al, Co, Ni, Mg, or the like. The metal oxides may contain one different element or two or more different elements. The positive electrode active material is usually used in particulate form.

Examples of the positive electrode active material include LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F. In each formula, M represents at least one element selected from the group consisting of Na, Mg, Sc, Y, Mn, Fe, Co, Ni, Cu, Zn, Al, Cr, Pb, Sb, V, and B. x = 0 to 1.2, y = 0 to 0.9, and z = 2.0 to 2.3.

Examples of the conductive material include carbon black (acetylene black, Ketjen black, and the like), carbon nanotubes, and carbon fibers. Examples of the binding agent include fluororesins, polyacrylonitrile, polyimide resins, acrylic resins, polyolefin resins, and rubbery polymers. Examples of the fluororesins include polytetrafluoroethylene and polyvinylidene fluoride. Examples of the thickener include carboxymethylcellulose salts.

### (Negative Electrode (Negative Electrode Plate))

The negative electrode includes a negative electrode current collector and a negative electrode mixture layer disposed on both surfaces of the negative electrode current collector. The negative electrode mixture layer contains a negative electrode active material and may contain other components (conductive material, binding agent, thickener, and the like). These components are not particularly limited, and known components used in the negative electrode of non-aqueous electrolyte secondary batteries may be used. As the conductive material, the binding agent, and the thickener, the materials exemplified for the conductive material, the binding agent, and the thickener of the positive electrode may be respectively used.

The negative electrode may be formed by a known method. In one example of a formation method, first, a negative electrode mixture slurry is prepared by mixing the components of the negative electrode with a dispersion medium. As the dispersion medium, water, alcohol, ether, N-methyl-2-pyrrolidone (NMP), a mixture thereof, or the like may be used. Next, the negative electrode mixture slurry is applied to the negative electrode current collector and then dried to form a laminate including the negative electrode current collector and the negative electrode mixture layer formed on the negative electrode current collector. Next, the laminate is rolled as needed. In this manner, the negative electrode is formed.

A conductive sheet can be used as the negative electrode current collector. The negative electrode current collector may be a non-porous conductive sheet (for example, non-porous metal foil). Alternatively, the negative electrode current collector may be a porous conductive sheet, and may be, for example, a metal mesh sheet or a punching metal. Examples of materials for the negative electrode current collector include stainless steel, nickel, a nickel alloy, copper, and a copper alloy. The thickness of the negative electrode current collector may be in a range of 1 to 50 µm (for example, in a range of 5 to 20 µm).

The negative electrode mixture layer contains the negative electrode active material, and contains, for example, the negative electrode active material and additives (such as the binding agent, the conductive material, and the thickener). The negative electrode can be formed by a known method. For example, first, the negative electrode mixture slurry containing the negative electrode active material and the additives is prepared. Next, a coating film is formed by applying the negative electrode mixture slurry to the negative electrode current collector and then drying it. Next, the negative electrode is obtained by rolling a laminate including the negative electrode current collector and the coating film. The formed negative electrode is cut into a predetermined size as needed. The thickness of the negative electrode mixture layer may be 3 µm or more or 5 µm or more, and may be 200 µm or less or 150 µm or less.

As the negative electrode active material contained in the negative electrode mixture layer, a material capable of reversibly absorbing and releasing lithium ions can be used. Examples of such a negative electrode active material include carbonaceous materials and silicon-containing materials. The negative electrode active material may contain a silicon-containing material or may be the silicon-containing material. Examples of the carbonaceous materials include graphite, easily graphitizable carbon (soft carbon), and non-graphitizable carbon (hard carbon). Examples of the silicon-containing material include elemental Si, silicon alloys, silicon compounds (such as silicon oxides), and composite materials in which the silicon phase is dispersed in a lithium ion-conducting phase (matrix). The negative electrode may contain only one type of negative electrode active material or two or more types of negative electrode active materials. The negative electrode active material is usually used in particulate form.

The additives contained in the negative electrode mixture layer are not particularly limited. As the binding agent, the conductive material, and the thickener, the materials exemplified for the binding agent, the conductive material, and the thickener of the positive electrode mixture layer may be respectively used. For example, the negative electrode mixture layer may contain carbon nanotubes.

### (Silicon-Containing Material)

The silicon-containing material is not particularly limited, and known silicon-containing materials used as the negative electrode active material of non-aqueous electrolyte secondary batteries may be used. The silicon-containing material may be silicon oxide. Alternatively, the silicon-containing material may be a silicon-containing composite material (composite particles). For example, the silicon-containing material may include an ion-conducting phase and the silicon phase dispersed in the ion-conducting phase. The ion-conducting phase may include or be at least one selected from the group consisting of a silicate phase, a carbon phase, a silicide phase, and a silicon oxide phase. Alternatively, the ion-conducting phase may be any of the silicate phase, carbon phase, silicide phase, and silicon oxide phase.

The silicon-containing material (negative electrode active material) may include the composite particles including the ion-conducting phase (matrix) and the silicon phase dispersed in the ion-conducting phase. In the composite particles, stress generated by expansion and contraction of the silicon phase during charging and discharging is relieved by the ion-conducting phase. Therefore, cracking and fracture of the particles are suppressed. As a result, it is possible to achieve both increased capacity due to inclusion of silicon and improved cycle characteristics.

The silicate phase is constituted of a compound containing a metal element, silicon (Si), and oxygen (O). Examples of the metal element include alkali metal elements (such as lithium) and Group 2 elements (Group 2 elements in the long-period periodic table). The silicate phase preferably contains lithium silicate, and may be a lithium silicate phase. The lithium silicate phase is preferred because it facilitates movement of lithium ions into and out of the silicate phase. The lithium silicate phase has a smaller irreversible capacity compared to the silicon oxide phase. The ion-conducting phase may contain the lithium silicate phase as the main component (content: 50 mass% or more), and may further contain the silicon oxide phase. The lithium silicate phase may contain at least one selected from the group consisting of Li₂Si₂O₅, Li₂SiO₃, and Li₄SiO₄, or any one of them.

The silicate phase may contain another element M in addition to Li, Si, and O. By including another element M in the silicate phase, it is possible to improve the chemical stability and lithium ion conductivity of the silicate phase. Furthermore, by including another element M in the silicate phase, it is possible to suppress side reactions between the silicate phase and the non-aqueous electrolyte.

The silicate phase may contain, as the element M, at least one element selected from the group consisting of alkali metal elements (excluding lithium) and Group 2 elements. Na and/or K are preferably used as inexpensive alkali metal elements. The Group 2 element may be Ca and/or Mg.

From the viewpoint of increasing capacity and improving cycle characteristics, the content of the silicon phase in the composite particles may be 45 mass% or more and 70 mass% or less, 50 mass% or more and 70 mass% or less, or 58 mass% or more and 70 mass% or less.

The silicon oxide phase is constituted of a compound of Si and O. A main component (for example, 95 to 100 mass%) of the silicon oxide phase may be silicon dioxide. The silicon oxide phase may be a phase represented by a formula SiOₓ (0.5 ≤ x < 1.6).

An average particle size of the composite particles may be 1 µm or more and 25 µm or less, 4 µm or more and 15 µm or less, or 6 µm or more and 8 µm or less. Within the above range, good battery performance is easily obtained. Note that the average particle size of the composite particles is a median diameter (D50) at which a cumulative volume in a volume-based particle size distribution reaches 50%. The average particle size (median diameter) is determined using a laser diffraction/scattering particle size distribution analyzer.

In the above description of the composite particles, the silicate phase may be replaced with the carbon phase, the silicide phase, or the silicon oxide phase. The silicide constituting the silicide phase may be an intermetallic compound of silicon and a metallic element Me. The metallic element Me may be at least one element selected from the group consisting of Al, Mg, Ti, V, Cr, Mn, Fe, Co, Ni, Cu, and Mo.

### (Coating Layer)

At least part of the surfaces of the composite particles (silicon-containing material) may be covered with a coating layer. The proportion of the coating layer to the entire composite particles including the coating layer is preferably 3 mass% or more and 5 mass% or less. The coating layer may contain a conductive carbon material. From the viewpoint of ensuring conductivity, the thickness of the coating layer is preferably 1 nm or more. The thickness of the coating layer may be 200 nm or less, 100 nm or less, or 10 nm or less.

In one example of a method for forming a conductive coating layer, first, a mixture is obtained by mixing a raw material of a carbon material with the composite particles (silicon-containing material). Next, by firing the mixture to carbonize the raw material of the carbon material, the conductive coating layer can be formed on the surfaces of the composite particles. As the raw material of the carbon material, coal pitch, petroleum pitch, phenolic resin, and the like can be used. The firing temperature may be 450°C or higher and 1000°C or lower. The firing time may be 1 hour or more and 10 hours or less.

### (Method for Manufacturing Composite Particles)

The following describes an example of a method for manufacturing composite particles including the lithium silicate phase as an example of the composite particles (silicon-containing material). The composite particles are manufactured, for example, by the following manufacturing method including the following first to fourth steps. However, the composite particles may be manufactured by methods other than the manufacturing method described below.

### (First Step)

The first step is a step of preparing or synthesizing lithium silicate (a compound that forms an ion-conducting phase). Commercially available lithium silicate may be used as the lithium silicate. Alternatively, the lithium silicate may be synthesized by a known method.

### (Second Step)

The second step is a step of forming a composite intermediate including the lithium silicate phase and the silicon phase dispersed in the lithium silicate phase by compounding the lithium silicate and raw silicon. In one example of the second step, first, a mixture is obtained by mixing the lithium silicate (compound that forms the ion-conducting phase) and the raw silicon. Next, a fine-grained composite intermediate is obtained by grinding (and stirring) the mixture while applying a shear force. At this time, the raw silicon is ground into the silicon phase. The silicon phase is dispersed in the lithium silicate (matrix) phase. Grinding can be performed using a grinding device (for example, a ball mill).

### (Third Step)

The third step is a step of forming a sintered body including the lithium silicate phase and the silicon phase dispersed in the lithium silicate phase by heat treatment of the composite intermediate. In one example of the third step, the sintered body is formed by firing the composite intermediate (for example, the fine-grained composite intermediate) obtained in the second step while applying pressure using a hot press or the like. Firing of the composite intermediate may be performed in an inert atmosphere (for example, an argon gas atmosphere or a nitrogen gas atmosphere). The firing temperature is preferably 450°C or higher and 1000°C or lower. The firing time may be 1 hour or more and 10 hours or less.

### (Fourth Step)

In the fourth step, the composite particles including the silicate phase and the silicon phase dispersed in the silicate phase are obtained by grinding the sintered body. By selecting grinding conditions, the composite particles having a predetermined average particle size can be obtained.

When the ion-conducting phase is a phase (for example, the carbon phase or the silicide phase) other than the lithium silicate phase, in the first step, a material (for example, the carbon material or the silicide) other than lithium silicate can be prepared. The material other than lithium silicate may be a commercially available material or may be synthesized by a known method. In the second and subsequent steps, the above-mentioned material can be used instead of lithium silicate.

The content of the silicon-containing material in the negative electrode mixture layer can be determined by the following method. First, a cross-section of the negative electrode is exposed using a predetermined method (for example, ion milling or cross-section polishing). Next, the exposed cross-section is observed using a transmission electron microscope (SEM). Next, a ratio of Si to other elements (for example, carbon) of the silicon-containing material present in the cross-section is calculated using energy dispersive X-ray spectroscopy (EDS). Further, the amount of Si is quantified by ICP emission spectroscopy after dissolving the negative electrode mixture layer in hydrofluoric acid. The content of the silicon-containing material in the negative electrode mixture layer can be determined by these analyses.

### (Separator)

The separator described above can be used as the separator.

### (Non-Aqueous Electrolyte)

The non-aqueous electrolyte may be a non-aqueous electrolyte containing a non-aqueous solvent and an electrolyte salt. The electrolyte may be a gel-like electrolyte obtained using a gel-like polymer or the like.

Examples of the non-aqueous solvent include cyclic carbonates and chain carbonates. Examples of the cyclic carbonates include ethylene carbonate, propylene carbonate, and butylene carbonate. Examples of the chain carbonates include dimethyl carbonate, diethyl carbonate, and ethyl methyl carbonate.

Examples of the electrolyte salt include LiPF₆, LiBF₄, LiClO₄, LiAsF₆, LiCF₃SO₃, LiN(SO₂CF₃)₂, LiN(SO₂C₂F₅)₂, and LiC(SO₂CF₃)₃. The non-aqueous solvent and the electrolyte salt each may be used alone or in combination of two or more types.

### (Battery Case)

The battery case of the secondary battery (B) is not particularly limited, and a known battery case may be used. The battery case of the secondary battery (B) may be cylindrical or rectangular tubular. The battery case may include a bottomed cylindrical case body, a sealing body for sealing an opening of the case body, and a gasket disposed between the case body and the sealing body. As the case body, a case body made of metal can be used, and for example, a metal case body made of metal mainly composed of iron can be used.

An example of the secondary battery (B) will be described in detail with reference to a drawing below. The constituent elements described above can be applied to the constituent elements of the example described below. Further, the constituent elements of the example described below can be modified based on the above description. Further, matters described below may be applied to the above embodiment. Furthermore, constituent elements that are not essential to the secondary battery (B) may be omitted in the example described below.

### (First Embodiment)

An example of a cylindrical secondary battery (B) will be described in a first embodiment. FIG. 1 schematically illustrates a cross-section of an example of a non-aqueous electrolyte secondary battery 10 of the first embodiment. The secondary battery 10 includes a cylindrical battery case, a wound-type electrode group 14 and the non-aqueous electrolyte (not illustrated) housed in the battery case. The battery case includes a case body 15 and a sealing body 16 that seals the opening of the case body 15. The case body 15 is a bottomed cylindrical case made of metal. The case body 15 has a stepped portion 21. A gasket 27 is disposed between the case body 15 and the sealing body 16. Inside the case body 15, insulating plates 17 and 18 are respectively disposed at both ends of the electrode group 14.

The sealing body 16 includes a filter 22, a lower valve body 23, an insulating member 24, an upper valve body 25, and a cap 26. Members other than the insulating member 24 are electrically connected to each other. The sealing body 16 also functions as a safety valve when an internal pressure inside the battery case increases.

The electrode group 14 is formed by winding the positive electrode 11, the negative electrode 12, and the separator 13 so that the separator 13 is disposed between the positive electrode 11 and the negative electrode 12. The positive electrode 11, the negative electrode 12, and the separator 13 are each strip-shaped. The positive electrode 11 includes the positive electrode current collector and the positive electrode mixture layer formed on both surfaces of the positive electrode current collector. The negative electrode 12 includes the negative electrode current collector and the negative electrode mixture layer formed on both surfaces of the negative electrode current collector. The separator described above is used as the separator 13.

### (Supplementary Note)

The above description discloses the following technologies.

### (Technology 1)

A non-aqueous electrolyte secondary battery including:
an electrode group including a positive electrode, a negative electrode, and a separator; and
a non-aqueous electrolyte, wherein
the negative electrode includes a negative electrode current collector and a negative electrode mixture layer disposed on the negative electrode current collector, and
an activation energy of the separator at 100°C to 135°C as measured by dynamic viscoelasticity measurement is 400 kJ/mol or more and 700 kJ/mol or less.

### (Technology 2)

The non-aqueous electrolyte secondary battery according to Technology 1, wherein
the negative electrode mixture layer contains a silicon-containing material, and
a content of the silicon-containing material in the negative electrode mixture layer is 6 mass% or more and 20 mass% or less.

### (Technology 3)

The non-aqueous electrolyte secondary battery according to Technology 2, wherein
the silicon-containing material includes an ion-conducting phase and a silicon phase dispersed in the ion-conducting phase, and
the ion-conducting phase is at least one selected from the group consisting of a silicate phase, a carbon phase, a silicide phase, and a silicon oxide phase.

### (Technology 4)

The non-aqueous electrolyte secondary battery according to any one of Technologies 1 to 3, wherein an expansion rate of the negative electrode during charging is 20% or more and 40% or less.

### (Technology 5)

The non-aqueous electrolyte secondary battery according to any one of Technologies 1 to 4, wherein
the negative electrode mixture layer contains carbon nanotubes, and
a content of the carbon nanotubes in the negative electrode mixture layer is 0.01 mass% or more and 0.05 mass% or less.

### (Technology 6)

The non-aqueous electrolyte secondary battery according to any one of Technologies 1 to 5, wherein a thickness of the separator is 3 µm or more and 15 µm or less.

### (Technology 7)

The non-aqueous electrolyte secondary battery according to any one of Technologies 1 to 6, wherein the positive electrode, the negative electrode, and the separator are wound together in the electrode group.

### (Technology 8)

The non-aqueous electrolyte secondary battery according to Technology 7, wherein
the negative electrode has a non-facing portion that does not face the positive electrode across the separator on an inner peripheral end side of the negative electrode, and
the number of turns of the non-facing portion is 0.4 turns or more and 1.2 turns or less.

### (Technology 9)

The non-aqueous electrolyte secondary battery according to Technology 7 or 8, wherein the number of turns of a portion where the positive electrode and the negative electrode face each other is 15 turns or more and 60 turns or less.

### Examples

The non-aqueous electrolyte secondary battery according to the present disclosure will be described in detail below with reference to examples. In the examples, a plurality of the non-aqueous electrolyte secondary batteries were prepared and evaluated as follows.

### (Preparation of Battery A1)

### (1) Preparation of Composite Particles

Silicon dioxide and Li₂CO₃ were mixed, and the mixture was fired in air at 950°C for 10 hours to obtain silicate. The obtained silicate was ground to an average particle size of 10 µm. Next, the silicate and raw silicon (average particle size: 10 µm) were mixed. In the mixture, a mass ratio of the silicate to the raw silicon was 42:58.

The mixture was loaded into a pot (made of stainless steel, volume: 500 mL) of a planetary ball mill (P-5 manufactured by Fritsch), 24 stainless steel balls (20 mm in diameter) were placed in the pot, an opening of the pod was closed with a lid, and the mixture was ground in an inert atmosphere at 200 to 300 rpm for 25 hours.

Next, the powdered mixture was taken out in the inert atmosphere and fired under pressure using a hot press machine in the inert atmosphere to obtain a sintered body of the mixture. Next, the obtained sintered body was ground and passed through a 40 µm mesh to obtain composite particles with an average particle size (median diameter) of 6 µm. The composition of a main component of the silicate phase in the composite particles was Li₂Si₂O₅.

Next, the composite particles and coal tar pitch were mixed at a mass ratio of 95:5, and then fired at 800°C in an argon atmosphere to form a conductive coating layer covering at least part of the surfaces of the composite particles, to obtain silicon-containing particles. The coal tar pitch was converted into amorphous carbon by firing.

### (2) Preparation of Negative Electrode

The silicon-containing particles (silicon-containing material) and graphite were mixed at a predetermined mass ratio and used as the negative electrode active material. Water was added to a negative electrode mixture containing the negative electrode active material, Na salt of CMC, and SBR at a mass ratio of 97.5:1:1.5, and the mixture was stirred to prepare a negative electrode mixture slurry. The content of the silicon-containing material in the negative electrode mixture layer is shown in Table 1. Next, coating films were formed by applying the negative electrode mixture slurry to both surfaces of a negative electrode current collector (copper foil), and then the coating films were dried to form a laminate including the negative electrode current collector and the negative electrode mixture layer formed on both surfaces of the negative electrode current collector. Next, the laminate was rolled. In this manner, a negative electrode including the negative electrode current collector and the negative electrode mixture layer formed on both surfaces of the negative electrode current collector was prepared.

### (3) Preparation of Positive Electrode

A positive electrode slurry was prepared by adding NMP to a positive electrode mixture containing lithium cobalt oxide, acetylene black, and PVDF at a mass ratio of 95:2.5:2.5 and stirring the mixture. Next, the positive electrode slurry was applied to surfaces of an aluminum foil, and the coating films were dried and then rolled to prepare a positive electrode in which a positive electrode mixture layer with a density of 3.6 g/cm³ was formed on both surfaces of the aluminum foil.

### (4) Preparation of Non-Aqueous Electrolyte

A non-aqueous electrolyte (electrolyte solution) was prepared by dissolving LiPF₆ in a non-aqueous solvent to a concentration of 1.0 mol/L. A mixed solvent obtained by mixing ethylene carbonate and diethyl carbonate at a volume ratio of 3:7 was used as the non-aqueous solvent.

### (5) Preparation of Secondary Battery

Tabs were attached to both the positive and negative electrodes. Next, a wound-type electrode group was prepared by winding the positive and negative electrodes with a separator therebetween. A porous film (thickness: 12 µm) made of high-density polyethylene with the activation energy (E) shown in Table 1 was used as the separator. The number of turns of a non-facing portion of the negative electrode that did not face the positive electrode across the separator on the inner peripheral end side of the negative electrode was set to 0.6 turns.

Next, the electrode group was inserted into a bottomed cylindrical case body (exterior can), and the negative electrode tab was welded to a bottom inner surface of the case body. Further, the positive electrode tab was welded to an internal terminal plate of a sealing body. Thereafter, the non-aqueous electrolyte was poured into the exterior can, and an opening of the exterior can was sealed using the sealing body and a gasket. In this manner, a non-aqueous electrolyte secondary battery (battery A1) was obtained.

The following evaluations were performed on the prepared battery A1.

### (i) Measurement of Capacity Retention Rate

For the battery A1, constant current charging was performed at a 3-hour rate current until a battery voltage reached 4.2 V in an environment of 25°C, and subsequently constant voltage charging was performed with a 50-hour rate current as a termination current at the battery voltage of 4.2 V. Thereafter, constant current discharge was performed at a 3-hour rate current until the battery voltage reached 3 V. This charge-discharge cycle was performed 400 times. Then, the capacity retention rate was calculated using the following formula. 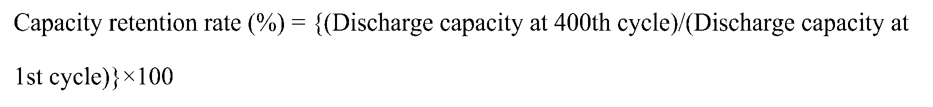 Capacity retention rate (%) = {(Discharge capacity at 400th cycle)/(Discharge capacity at 1st cycle)}×100

### (ii) Expansion Rate of Negative Electrode

The expansion rate of the negative electrode was measured by the following method. First, a thickness Tna of the negative electrode formed in the above step (2) was measured. Next, the prepared battery A1 was charged with a constant current of 0.3It until the battery voltage reached 4.2 V, and then charged with a constant voltage of 4.2 V until the current reached 0.02It. The current It is a current value expressed as It (A) = rated capacity (Ah)/1 (h). The charged battery A1 was disassembled, and a thickness Tnb of the negative electrode was measured. Note that the thickness of the negative electrode was measured using a digital length measuring machine (MH-15M) manufactured by Nikon Solutions Co. Ltd. The measurement was performed using a measurement probe with a flat tip shape (diameter: 5 mm). The expansion rate of the negative electrode during charging was determined using the following formula.$Expansion rate of the negative electrode during charging \left(%\right) = 100 \times \left(Tnb-Tna\right) / Tna$

### (iii) Forced Short-Circuit Test

A forced short-circuit test was performed using the following method. First, the battery A1 was charged with a constant current of 0.3It until the battery voltage reached 4.2 V. Next, the charged battery A1 was placed in a 60°C constant temperature bath, and the two electrodes were short-circuited via a 50 mΩ external resistor to forcibly short-circuit the battery A1 externally. A surface temperature of a side surface of the exterior can of the battery was measured to check whether a maximum temperature became 140°C or higher. The forced short-circuit test described above was performed on five batteries A1.

### (Batteries A2 to A7, C1, and C2)

Batteries A2 to A7, C1, and C2 were prepared using the same method and conditions as the preparation of the battery A1, except that the activation energy (E) of the separator was changed and/or the content C(Si) of the silicon-containing material was changed. Table 1 shows the activation energy (E) and the content C(Si) of the separator. The material and thickness of the separators used were the same as those of the separator used in the preparation of the battery A1. The activation energy (E) was changed by changing a cooling rate and/or a stretching ratio of the material of the separator when it was extruded from a die head (T-die) and formed into a film on a cast roll.

The prepared batteries A2 to A7, C1, and C2 were evaluated in the same manner as the battery A1. Some of preparation conditions for the batteries and evaluation results are shown in Table 1. In Table 1, an initial discharge capacity is a discharge capacity at the first cycle of the charge-discharge cycle performed in measurement of the capacity retention rate. The content C(Si) of the silicon-containing material is the content of the silicon-containing material in the negative electrode mixture layer. For the forced short-circuit test, numbers shown in Table 1 indicate the numbers of batteries out of the five tested batteries having a surface temperature of 140°C or higher. High initial discharge capacity and cycle capacity retention rate are preferable. The cycle capacity retention rate is required to be 40% or more, and is preferably 75% or more.

**[Table 1]**

| Battery | Activation energy (E) (kJ/mol) | Content C(Si) of silicon-containing material (mass%) | Expansion rate of negative electrode (%) | Initial discharge capacity (relative value) | Cycle capacity retention rate (%) | Forced short-circuit test (the number of batteries having a temperature of 140°C or higher) |
|---|---|---|---|---|---|---|
| A1 | 400 | 6 | 20 | 100 | 80 | 0 |
| A2 | 400 | 15 | 30 | 107 | 78 | 0 |
| A3 | 400 | 20 | 40 | 110 | 75 | 0 |
| A4 | 500 | 20 | 40 | 110 | 76 | 0 |
| A5 | 700 | 20 | 40 | 110 | 77 | 0 |
| A6 | 400 | 3 | 15 | 96 | 82 | 0 |
| A7 | 400 | 25 | 45 | 113 | 42 | 0 |
| C1 | 360 | 6 | 20 | 100 | 36 | 0 |
| C2 | 750 | 6 | 20 | 100 | 82 | 4 |

The batteries A1 to A7 are the secondary batteries (B) according to the present disclosure, and the batteries C1 and C2 are comparative examples. As shown in Table 1, the cycle capacity retention rate could be increased by setting the activation energy to 400 kJ/mol or more. Further, the temperature rise of the battery during the forced short-circuit could be suppressed by setting the activation energy to 700 kJ/mol or less. The capacity could be increased by setting the content C(Si) of the silicon-containing material to 6 mass or more. A high cycle capacity retention rate could be achieved by setting the content C(Si) to 20 mass% or less.

### [Industrial Applicability]

The present disclosure is applicable to the non-aqueous electrolyte secondary batteries.

The present invention has been described in relation to currently preferred embodiments, but such disclosure should not be interpreted restrictively. Various variations and modifications will be undoubtedly apparent to those skilled in the art in the field to which the present invention pertains by reading the above disclosure. Therefore, the appended claims should be construed as encompassing all variations and modifications without departing from the true spirit and scope of the present invention.

### [Reference Signs List]

10: non-aqueous electrolyte secondary battery, 11: positive electrode, 12: negative electrode, 13: separator, 14: electrode group.

## Claims

1. A non-aqueous electrolyte secondary battery comprising:
an electrode group including a positive electrode, a negative electrode, and a separator; and
a non-aqueous electrolyte, wherein
the negative electrode includes a negative electrode current collector and a negative electrode mixture layer disposed on the negative electrode current collector, and
an activation energy of the separator at 100°C to 135°C as measured by dynamic viscoelasticity measurement is 400 kJ/mol or more and 700 kJ/mol or less.

2. The non-aqueous electrolyte secondary battery according to claim 1, wherein
the negative electrode mixture layer contains a silicon-containing material, and
a content of the silicon-containing material in the negative electrode mixture layer is 6 mass% or more and 20 mass% or less.

3. The non-aqueous electrolyte secondary battery according to claim 2, wherein
the silicon-containing material includes an ion-conducting phase and a silicon phase dispersed in the ion-conducting phase, and
the ion-conducting phase is at least one selected from the group consisting of a silicate phase, a carbon phase, a silicide phase, and a silicon oxide phase.

4. The non-aqueous electrolyte secondary battery according to claim 1 or 2, wherein an expansion rate of the negative electrode during charging is 20% or more and 40% or less.

5. The non-aqueous electrolyte secondary battery according to claim 1 or 2, wherein
the negative electrode mixture layer contains carbon nanotubes, and
a content of the carbon nanotubes in the negative electrode mixture layer is 0.01 mass% or more and 0.05 mass% or less.

6. The non-aqueous electrolyte secondary battery according to claim 1 or 2, wherein a thickness of the separator is 3 µm or more and 15 µm or less.

7. The non-aqueous electrolyte secondary battery according to claim 1 or 2, wherein the positive electrode, the negative electrode, and the separator are wound together in the electrode group.

8. The non-aqueous electrolyte secondary battery according to claim 7, wherein
the negative electrode has a non-facing portion that does not face the positive electrode across the separator on an inner peripheral end side of the negative electrode, and
the number of turns of the non-facing portion is 0.4 turns or more and 1.2 turns or less.

9. The non-aqueous electrolyte secondary battery according to claim 7, wherein the number of turns of a portion where the positive electrode and the negative electrode face each other is 15 turns or more and 60 turns or less.
